# EUROPEAN PATENT SPECIFICATION

(11) **EP 2 293 608 B1**
(45) Date of publication and mention of the grant of the patent: **11.01.2017**
(21) Application number: 09169303.6
(22) Date of filing: 02.09.2009
(51) Int. Cl.: H04W 12/02, H04L 29/06, H04L 29/08

(54) **Mobile device management**
Mobilvorrichtungsverwaltung
Gestion de dispositifs mobiles

(43) Date of publication of application: 09.03.2011
(73) Proprietor: BlackBerry Limited, Waterloo, ON N2K 0A7 (CA)
(72) Inventor: Klassen, Gerhard Dietrich, Waterloo Ontario N2L 3L3 (CA); Major, Harry Richmond, Waterloo Ontario N2L 5Z5 (CA); Creditor, Karen Jean, Waterloo Ontario N2L 5Z5 (CA); Boudreau, Jesse J, Kanata Ontario K2K 3P1 (CA); Gagne, Alain Rene, Cambridge Ontario N1T 2J1 (CA)
(74) Representative: Gill Jennings & Every LLP

(56) References cited:
- EP-A1- 1 845 692
- US-A1- 2005 250 472
- US-A1- 2009 136 035
- Dilger, Daniel Eran: "Is Apple's MobileMe Secure?" 22 August 2008 (2008-08-22), XP002569062 Retrieved from the Internet: URL:http://www.roughlydrafted.com/2008/08/ 22/is-apples-mobileme-secure/> [retrieved on 2010-02-11]

## Description

The present disclosure relates generally to mobile communications devices and methods and more particularly to methods, devices and system for monitoring mobile communications devices.

Monitoring the use of mobile communications devices is an ongoing issue. Users of such devices can move about, whether or not the users are authorized to do so. Also, users can use the devices in ways that are not authorized. Such use can result in significant expenses.

In U.S. Patent Application Publication No. 2005/250472 filed by Silvester *et al* entitled "User Authentication Using A Wireless Device", a method for providing security to a computer system is described. Specifically, the computer periodically polls for a Bluetooth electronic device or other similar wireless electronic device. If the computer locates such a Bluetooth electronic device, the computer requests authentication from the Bluetooth electronic device. The user of the electronic device is given access to the computer system only if the computer recognizes the identification of the Bluetooth electronic device and is able to validate the authentication information provided by the Bluetooth electronic device through an encrypted channel.

Further prior art is EP1845692A1.

Improvements to monitoring of mobile communications devices are desirable.
**FIGURE 1** is a block diagram of an example embodiment of a mobile device management system incorporating features of the present disclosure;
**FIGURE 2** is a flow chart showing example processing actions performed by a master manager module on a master device according to an example embodiment of the present disclosure;
**FIGURE 3** is a flow chart showing example processing actions performed by a slave manager module on a slave mobile device according to an example embodiment of the present disclosure;
**FIGURE 4** is a graphical representation of a front view of an example of a mobile device suitable for performing the example processing actions of **Figure 3** or **Figure 2****,** or both;
**FIGURE 5** is a simplified block diagram of the example mobile device of **Figure 4**; and
**FIGURE 6** is a simplified block diagram of a communications environment suitable for the example mobile device of **Figure 4****.**

Like reference numerals are used in the drawings to denote like elements and features.

The invention is defined by the independent claims.

A device management system is described, in which a first mobile communications device (slave) is managed under the command of a second device (master). The slave mobile device is managed through a slave manager module resident on the slave mobile device. The master device commands the slave mobile device through the slave manager module. A master manager module is resident on the master device. The master device commands the slave manager module through at least one command message from the master device to the slave mobile device. The slave mobile device can be managed by controlling user-accessible features on the device, by monitoring user-accessible features, or both.

The user-accessible features that are managed by the slave manager module can comprise, for example, any user-accessible feature incorporated or installed on the slave mobile device, such as, cellular telephone functions, text messaging functions such as SMS or PIN messaging, e-mail functions, web browsers, games, multimedia applications including multimedia players or camera applications, social networking applications, calendars, address books, or GPS or mapping functions.

The slave manager module can be commanded to control the slave mobile device to prevent access by a user of the slave mobile device to one or more features according to certain criteria, such as for example, outside specified periods of time or dates, above a maximum usage level, to communicate except other than to permitted third parties, to communicate with prohibited third parties, or any combination of one or more of the foregoing.

The slave manager module can be commanded, for example, to monitor any of the above user-accessible features. Monitoring of one or more user-accessible features on the slave mobile device may comprise a periodic or on-demand transfer of data to the master device, such as recent accesses to user-accessible features. Additionally or alternatively, the slave manager module can provide an immediate notification of current status or prohibited activity.

Management commands can, for example, be communicated by the master manager module on the master device to the slave manager module on the slave mobile device and confirmed by the slave manager module to the master manager module, and monitored activity or status information can, for example, be communicated by the slave manager module to the master manager module in a message through any device-readable messaging capability, such as, for example, PIN messaging, SMS messaging and e-mail messages. Such messages are in some example embodiments, encrypted to provide security and reliability.

The master manager module and slave manager module can listen for such messages by periodically accessing incoming message queues of the message capability or setting forwarding capabilities of such messaging capabilities.

The present disclosure will now be described in detail for the purposes of illustration only, in conjunction with certain embodiments shown in the enclosed drawings.

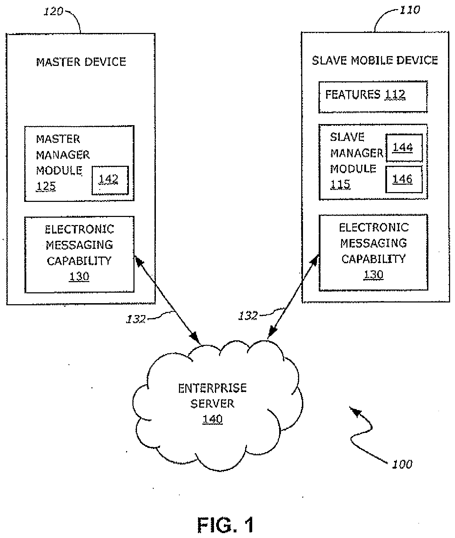

Turning now to **Figure 1****,** there is shown a block diagram of an example embodiment of a mobile device management system incorporating features of the present disclosure. The system, shown generally at **100,** comprises a first mobile device **110,** designated the slave mobile device, and a second device **120,** designated the master device. As an example, the slave mobile device **110** and the master device **120** may be used, respectively, by a child and parent, or by spouses, or by an employee and employer.

The slave mobile device **110** incorporates one or more mobile communication device features **112** which can be incorporated in one or more software applications on the slave mobile device **110,** and a slave manager module **115** which can also be incorporated in one or more software applications on the slave mobile device **110.** The slave manager module **115** receives one or more command messages from the master device **120** and manages the slave mobile device **110** in accordance with the command messages, by controlling or monitoring, access to one or more user-features **112.**

Additionally, the slave manager module **115** can generate and transmit one or more confirmation messages to the master device **120** to confirm that command messages received from the master device **120** have been given effect. Further, the slave manager module **115** can generate and transmit one or more status report messages to the master device **120** providing updates as to the occasion, status and details of access to one or more monitored features of the slave mobile device **110.**

The master device **120** can be a mobile device similar to the slave mobile device **110,** except with a master manager module **125** in place of the slave manager module **115** which may be incorporated in one or more software applications on the master device **120.** The master manager module **125** provides a user interface to display command options to command a slave manager module **115** and to accept command inputs from a user, and generates one or more command messages that the master manager module **125** transmits, to the slave manager module **115** of the slave mobile device **110.** Additionally, the master manager module **125** accepts one or more confirmation messages from the slave manager module **115** or one or more status report messages from the slave manager module **115.**

While the master device **120** is described above as being a mobile communications device similar to the slave mobile device **110,** the master device **120** may be a device other than a mobile device, for example, a desktop computer (not shown) with SMS or other suitable device-readable messaging capability.

The slave mobile device **110** and the master device **120** each transmit and receive messages through a two-way electronic (or device-readable) messaging capability **130** such that the slave manager module **115** and the master manager module **125** can read the content of the messages to perform the functions described herein. For example, the two-way electronic messaging capability **130** can use text-based electronic messaging such as email, personal identification number (PIN) messaging or short message service (SMS) text messaging functions, or other forms of electronic messaging. The two-way electronic messaging capability **130** may use other transport layers and protocols to the extent available to the slave manager module **115** and the master manager module **125.** Such two-way electronic messaging capability **130** facilitates communication of messages between the slave mobile device **110** and the master device **120** and may involve network communications through one or more nodes, one of which may be a central enterprise server **140.**

One or more listeners **142** may exist on the master device **120** to be utilized by the master manager module **125** to listen for messages communicated by the slave manager module **115** and one or more listeners **144** may exist on the slave mobile device **110** to be utilized by the slave manager module **115** to listen for messages communicated to it by the master manager module **125** or the occurrence of events or both.

Messages between the slave mobile device **110** and the master device **120** constitute a communications channel **132** extending between the slave mobile device **110** and the master device **120.**

To address privacy concerns of users of the system **100,** messages exchanged between the slave manager module **115** and the master manager module **125** are encrypted in some example embodiments by using a shared secret so that communications across the communications channel **132** can be authenticated by modules **115, 125 as** having been sent by the corresponding other module **125, 115,** and not altered or understood by a third party, including an enterprise server **140** that gives effect to the communications channel **132.**

Methods of performing such encryption may include a unique password, commonly referred to as an encryption key, known to both modules **115, 125.** For example, a message may be encrypted by the master manager module **125** using the password, and decrypted by the slave manager module **115** using the same password. Other example embodiments may use public-key encryption employing a private key and a public key.

One or more encryption keys can be manually input into the modules **115, 125** through human interface devices, such as keyboards, of the devices **110, 120** and appropriate user interface screens of the modules **115, 125.** Alternatively, one or more encryption keys can be generated by one of modules **115** and **125** and manually input into the other module **125, 115.** For example, one or more keys can be generated on master manager module **125** and manually input into the slave manager module **115** through a human interface device, such as a keyboard, of the slave mobile device **110** and an appropriate user interface screen of the slave manager module **115.** As a further alternative, the keys can be exchanged between the modules **115, 125** over a secure network or other connection, such as a peer to peer network over a USB, or other physical, cable.

If desired, one or more keys can be exchanged between the modules **115, 125** using a key exchange protocol to jointly establish a shared key or otherwise exchange a key on an insecure network or other communications channel prior to establishment of a secure communications channel **132.** A number of different protocols, such as Diffie-Hellman key exchange or SPEKE (Simple Password Exponential Key Exchange) can be used. Other protocols can also be used. Such protocols can be incorporated into the modules **115, 125** as desired to eliminate or minimize user input. Where encryption keys are to be exchanged, the keys could be generated on the respective devices apart from the modules **115, 125,** such as an existing public key - private key pair, and exchanged, or created automatically by the modules **115, 125** upon installation, or upon request thereafter.

The exchanging or inputting of one or more encryption keys into the slave mobile device **110** and master device **120** to enable the secure communications channel is referred to as pairing, and results in a paired slave mobile device **110** and master device **120.**

Pairing will typically be performed by a user of the master device **120** where tampering by the user of the slave mobile device **110** is a concern. Where such tampering is a concern, the slave manager module **115** can be configured to be non-user-accessible such that its encryption key and configuration cannot be altered once input except by a request message from the master manager module **120.**

More than one slave mobile device **110** can be paired with any given master device **120,** although, in some example embodiments there is only one master device **120** paired with each slave mobile device **110.** A configuration allowing more than one master device **120** for a slave mobile device **110** may be appropriate, for example, if two parents, each having a master device **120,** would like to manage the slave mobile device **110** of a child.

Because of the possibility of mischief by establishing a pairing between the slave mobile device **110** and a device (not shown) seeking to stand in as a master device **120,** in some example embodiments a security mechanism is employed to reduce the likelihood of such other device (not shown) infiltrating itself as one of, or as, the master device **120.** One example security mechanism may ensure that once a pairing is created between a slave mobile device **110** and a master device **120,** no further pairing can be created between the slave mobile device **110** and any other device (not shown) as a master device **120,** either at all, or without the participation of the existing master device **120,** by way of authorization from the master device **120.** Such an example embodiment prevents the creation of an undesired pairing between the slave mobile device **110** and such other device (not shown), should the slave mobile device **110** fall into the hands of a third party in possession of such other device (not shown), for example, where a child provides the slave mobile device **110** to another person.

Moreover, as also discussed later, depending upon the context, a particular mobile device may operate as both a slave mobile device **110** and as a master device **120** in a pairing with a third device (not shown).

A mobile communications device may have either or both of a slave manager module **115** and a master manager module **125,** or a combined master/slave manager module (not shown) that operates in a master mode similar to the master manager module **125** and a slave mode similar to the slave manager module **115.**

Two devices may be paired so that one acts as the slave mobile device **110** to the other's master device **120** and *vice versa.* Such an embodiment provides a mutual monitoring capability, for example, between spouses, where a mutual decision has been made to limit access to a text messaging capability to subscribed usage limits.

In such a scenario, each of the two sets of modules **115, 125** may be separately paired. Alternatively, they may share a common key if security between the users is not a concern.

User-accessible features on the slave mobile device **110** are managed by the master device **120** through the respective slave manager module **115** and the master manager module **125.** Such features **112** can comprise, for example, any user-accessible feature **112** incorporated or installed on the slave mobile device **110,** such as, cellular telephone functions, text messaging functions such as SMS or PIN messaging, e-mail functions, web browsers, games, multimedia applications including multimedia players or camera applications, social networking applications, calendars, address books, or GPS or mapping functions.

The management of such user-accessible features **112** on the slave mobile device **110** may be controlled in some example embodiments by use of one or more processes **146** actuated and created by the slave manager module **115.**

The slave mobile device **110** can be controlled by the master device **120** to prevent access by a user of the slave mobile device **110** to one or more features **112** according to certain criteria, such as for example, outside specified periods of time or dates, above a maximum usage limit, to communicate except other than to permitted third parties, to communicate with prohibited third parties, or any combination of one or more of the foregoing.

Thus, for example, a slave mobile device **110** may be controlled by the slave manager module **115** under the command of a paired master manager module **125** to prevent the slave mobile device **110** sending or receiving text messages, answering the phone or placing phone calls, accessing the internet or using multimedia applications, games or social networking applications during the week between the hours of 9:00 am and 3:00 pm, that is, during school hours.

Furthermore, a slave mobile device **110** may be controlled by the slave manager module **115** under the command of a paired master manager module **125** to prevent internet, text messaging, e-mail, cell phone usage or other fee-based services usage above given limits to limit excess use charges. As well, certain phone numbers (*e*.*g*. "900" or "976" pay per call services) or Internet sites could be forbidden, irrespective of when the attempted access occurred.

In some example embodiments, some monitoring settings on the slave manager module **115** can cause a status report to be sent from the slave manager module **115** to the master manager module **125** in the event that limits are reached or forbidden access is attempted.

By way of example, the master manager module **125** can command the slave manager module **115** through one or more control settings in the slave manager module **115** to selectively override usage limits, for example, to allow communications at any time by way of text message, e-mail or telephone to or from certain authorized persons, such as a 911 emergency call centre, parents, grandparents or siblings, or spouses, or employers, depending on the particular circumstances of use of the paired devices **110, 120.** Methods of communication with authorized persons can be identified directly by device addressing data such as phone numbers, email addresses, SMS or PIN numbers, or the like, or by name through an address book to such addressing data, for example.

Additionally, certain features **112** may be monitored only, including without limitation, any of the above-referenced controllable user features **112.**

Monitoring of one or more user-accessible features **112** on the slave mobile device **110** may comprise a periodic or on-demand download of pertinent information relating to recent accesses via one or more messages sent along communications channel **132,** a current status or an immediate notification of certain prohibited or suspect activity in a message comprising a status report from the slave manager module **115** to the master manager module **125.**

For example, as a safety measure for a user of the slave mobile device **110,** the slave manager module **115** could be configured to provide one or more messages comprising status reports on a periodic basis (for example, at the end of the week) providing call, e-mail or text message logs. Additionally, the contents of the contact list relationships for a social networking module or subscriber identification module (SIM) card of the slave mobile device **110** could be downloaded in one or more messages comprising a status report on a periodic basis.

Thus, in the case of an abduction of a user of the slave mobile device **110,** such logs could be retrieved from the master manager module **125** and analyzed to understand the user's recent activities with a view to establishing clues to the user's potential whereabouts and the contacts of the user could be contacted if the user is missing.

In the same vein, if a user of the slave mobile device **110** has disappeared and the slave mobile device **110** is equipped with a GPS receiver and mapping module, additional messages comprising status reports could be requested by a user of the master device **120** using the functionality of the master manager module **125** on an as-needed basis. For example, the slave manager module **115** could report the present whereabouts of the slave mobile device **110** by accessing its mapping module.

The mapping module can be controlled by the slave manager module **115** under direction of the master manager module **125** to keep data regarding the location of the slave mobile device **110** for a rolling period of time, and to provide such data upon request in one or more messages comprising a status report. For example, such a message could report the location of the slave mobile device **110** the previous evening (including when it was returned home), or whether the slave mobile device **110** deviated from a predetermined path, for example, from school to home after school (useful in the case of a younger child, whether walking or travelling by bus).

Additional capabilities for the system **100,** the slave mobile device **110,** and the master device **120** are possible. Furthermore, as more and varied user-accessible features **112** become available and more prevalent on slave mobile devices **110,** the system **100** may be configured to manage (through monitoring or controlling, or both) such additional user-accessible features **112** to provide a richer and more varied capability set.

The master manager module **125** provides suitable user interface screens to display management options to a user of the master device **120** and the user-selection of such options by a user of the master device **120.**

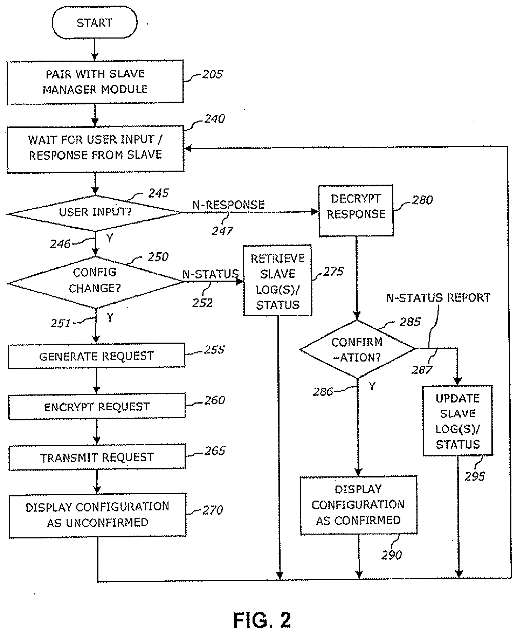

Turning now to **Figure 2****,** there is shown a flow chart showing example processing actions for the general operation of a master manager module, such as the master manager module **125** of **Figure 1** operating on a master device, such as the master device **120** of **Figure 1** as part of the management of a slave mobile device, such as slave mobile device **110** of **Figure 1****.** The operation of the master manager module **125** is not limited to the shown processing actions, nor are the shown processing actions limited to operation on the master device **120.**

The master manager module **125** is initially paired (action **205**) for secure communication of messages with the slave manager module **115** of **Figure 1** by the input of one or more encryption keys into the master device **120** and the slave device **110** as discussed in relation to **Figure 1****.**

Thereafter, the master manager module **125** waits (action **240**) for an input to process, which may be either a user input at the master manager module **125** or a response from the slave manager module **115.** Such user inputs are understood to be in relation to the master manager module **125** if the user interface screen of the master manager module **125** is the currently active window on the display of the master device **120** and user inputs are understood to be in relation to the user interface screen. Such responses from the slave manager module **115** are recognized by one or more listeners **142,** which detect the receipt of a response from the slave manager module **115.**

In one example embodiment, the processing flow first determines whether the input was a user input (action **245**) and if this is not the case, processes the input as a response (path **247**). In some example embodiments (not shown), the processing flow determines whether the input was a response and if this is not the case, processes the input as a user input. In other example embodiments, the determination of whether the input was a user input and of whether the input was a response may be performed effectively simultaneously.

If the input is a user input (path **246**), then the master manager module **125** determines (action **250**) if the user input is indicative of a request to change the configuration of the slave mobile device **110** or else to retrieve the logs(s) or status report(s) of the slave mobile device **110.** Such log(s) or status report(s) are derived from one or more responses previously communicated by the slave manager module **115** to the master manager module **125** and stored by the master manager module **125** or the master device **120,** for example, in memory.

If the user input is indicative of a request to change the configuration of the slave mobile device **110** (path **251**), the master manager module **125** generates (action **255**) a request that the configuration of the slave mobile device **110** be altered in accordance with the user input, encrypts the request (action **260**) and transmits the request (action **265**) to the slave manager module **115** of the slave mobile device **110.** Thereafter, the master manager module **125** updates a user interface screen displaying a configuration of the slave mobile device **110,** with the requested configuration change marked or highlighted to indicate that the configuration selection has not been confirmed (action **270**). Thereafter, the loop processing resumes by waiting (action **240**).

If the user input is indicative of a request to retrieve the log(s) or status report(s) of the slave mobile device **110** (path **252**), the master manager module **125** retrieves this information (action **275**). The retrieved log or status report information is output through one or more ports of the master device **120,** displayed on one of the displays associated with the master device **120,** or by any other suitable mechanism. Thereafter, the loop processing resumes waiting (action **240).**

If the input is a response from the slave manager module **115** (path **247**), then the response is decrypted (action **280**). Thereafter, the response may be interpreted (action **285**) to see if it contains a confirmation that a configuration change requested by the master manager module **125** to the slave manager module **115** (action **265**) has been given effect by the slave manager module **115,** or a status report.

If the response is a confirmation (path **286**), then the master manager module **125** updates (action **290**) the user interface screen displaying the configuration of the slave mobile device **110**, with the requested change marked or highlighted to indicate that the configuration selection has been confirmed. Thereafter, the loop processing resumes waiting (action **240**).

If the response is a status report (path **287**), then the master manager module **125** can update (action **295**) the log or status information stored by the master device **120** corresponding to the status of the slave mobile device **110** as indicated by the status report. For some reports the master manager module **125** can be configured to present an alert by way of a user interface display, a message (voice or text), or both, in combination with one or more visual, audible, tactile alerts or messages. For other reports, log or status information are simply stored by the master device **120** for later retrieval and/or display (action **275**). After updating the log or status information, the loop processing resumes waiting (action **240**).

In some embodiments (not shown) the step of retrieving information (275) from slave mobile device 110 may comprise generating a request, encrypting a request, and transmitting a request (similar to steps 255, 260 and 265).

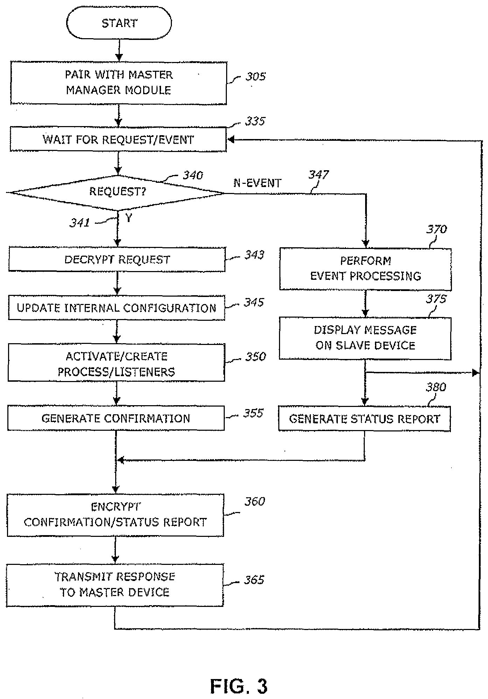

Turning now to **Figure 3****,** there is shown a flow chart showing example processing actions for the general operation of a slave manager module, such as the slave manager module **115** of **Figure 1****.** The operation of the slave manager module **115** is not limited to the shown processing actions, nor are the shown processing actions limited to operation on the slave mobile device **110.**

The slave manager module **115** is initially paired (action **305**) for secure communication of messages with the master manager module **125** according to one of the embodiments described in relation to **Figure 1****.**

Thereafter, the slave manager module **115** waits (action **335**) for an input to process, signaled by one or more of the event listeners **144.** Event listener **144** is configured to signal an input upon the receipt of a request from the master manager module **125** and upon the occurrence of an event at mobile slave device 110.

In one example embodiment, the processing flow first determines whether the input signaled by event listener 144 is a request from the master manager module **125** (action **340**) and if this is not the case, the signaled event is processed as an event (action **370**). In some example embodiments (not shown) the processing flow first determines whether the input was an event and if this is not the case, processes the input as a request. In example embodiments, the determination of whether the input was a request and of whether the input was an event may be performed effectively simultaneously.

If the input is a request (path **341**), then the slave manager module **115** decrypts the request (action **343**) and updates an internal configuration of the slave mobile device **110** maintained by the slave manager module **115** (action **345**) to reflect a requested configuration change embodied in the request. Thereafter, the slave manager module **115** activates (which may involve creating) one or more processes **146** (action **350**) to give effect to the request and as appropriate, creates one or more event listeners **144** to trigger upon the occurrence of a described event in the process(es) thus activated.

For a first example, if the requested configuration change indicates that outgoing calls are thereafter to be prohibited during the week between the hours of 9:00 am and 3:00 pm, that is, during school hours, an event listener **144** could be created against a telephone module, to be triggered whenever an outgoing call is being attempted. If an outgoing call was thereafter initiated, the listener **144** is triggered (action **335**) and the event may be processed (action **370**) by the slave manager module **115.**

For a second example, if the requested configuration change indicates that outgoing text messaging are thereafter to be limited to a maximum of 200 messages in a calendar month, an event listener could be created against an electronic messaging module, to be triggered whenever a text message is being attempted. Similarly, an event listener **144** could be created if the requested configuration change was to indicate that cell phone usage was therefore to be restricted to a maximum number of minutes per month to be triggered whenever a cell phone call is attempted.

For a third example, if the requested configuration change indicates that the master device **120** is to be notified by a status report in the event that the location of the slave mobile device **110** varied by a specified distance from a pre-determined path at a certain time of day, for example, during the week starting at 3:00 pm, one or more event listeners could be created against a mapping module, to be triggered when the speed or direction of the slave mobile device **110** deviates beyond a threshold, when the position of the slave mobile device **110** deviates from the path by a pre-determined amount, or when the position of the slave mobile device **110** exceeds a geo-fence established about the destination or the path.

For a fourth example, if the requested configuration change indicates that a status report containing certain log data or status information was to be periodically transmitted by the slave mobile device **110** to the master device **120,** an event listener could be created, to be triggered upon the expiry of the specified or pre-determined period.

Further processes **146** or event listeners **144** can be utilized to listen for events and carry out additional processes, or both, according to other configurations that may be requested from time to time by the master management module **125** such as in response to user inputs at the master device **120.**

Once the processes **141** or listeners **144** have been activated or created (action **350**), the slave manager module **115** generates a confirmation (action **355**), encrypts the confirmation (action **360**) and transmits the encrypted confirmation as a response (action **365**) to the master manager module **125** of the master device **120** for processing by the master manager module **125** as discussed above (action **290 of** **Figure 2**). This confirmation signifies that the configuration request message received by the slave manager module **115** has been processed and the appropriate processes **146** and event listeners **144,** or both, have been seen activated or created.

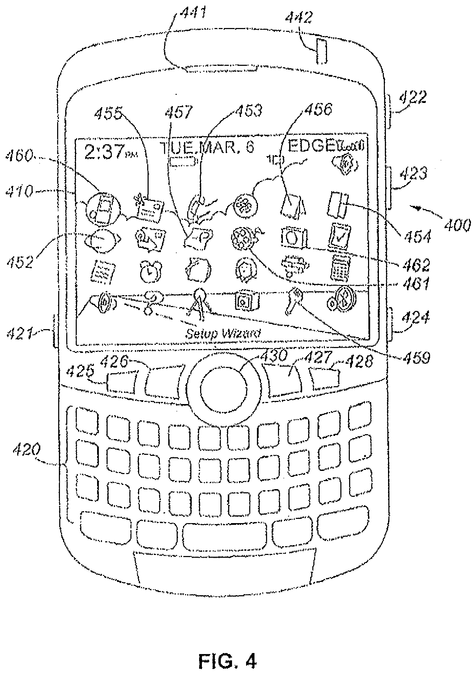

If the input is the occurrence of an event (path **347**), the slave manager module **115** performs (action **370**) processing associated with the event (usually through one or more activated or created process(es) **146** established at action **350**). Depending upon the context of the configuration scenario represented by the event, the slave manager module **115** may display (action **375**) information or a notification on a display (such as display **410** shown in **Figure 4**) of the slave mobile device **110,** or may generate (action **380**) a status report message to advise the master manager module **125** of certain activity, or both.

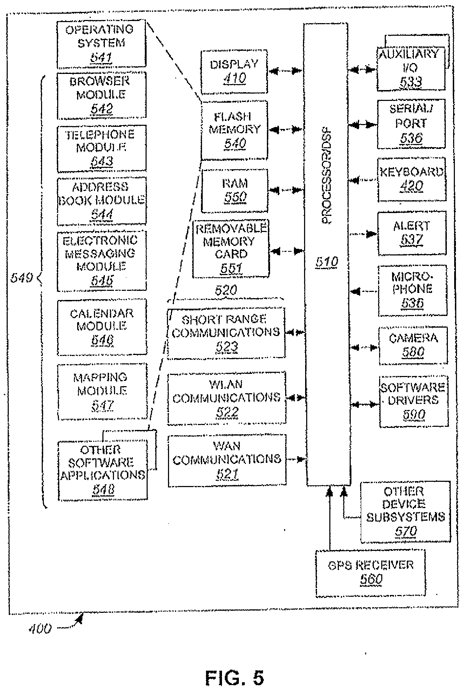

In the case of the first example discussed above, the slave manager module **115,** when triggered (action **370**) by an event listener **144** may activate or create a process **146** that would compare system time on the slave device **110** against the permitted hours. If the system time fell within the prohibited range, the process **146,** or in some example embodiments the slave management module **115** or both would not permit the call to be completed. For example, a telephone module (such as telephone module **543** shown in **Figure** 5) could allow the installation of a hook or call back before the call is placed. Then, when the call is being requested, the telephone module **543** would first advise the slave manager module **115** of any pertinent details, such as the phone number, to request permission to place the call. If permission is denied by the slave manager module **115** this status could be returned to the telephone module **543** so that the denial of access could be reported in a standard message format to the user of the slave mobile device **110.**

Alternatively or in addition, the slave manager module **115** could report this scenario to the user of the master device **120.** In such an instance, the slave manager module **115** may generate (action **380**) a status report to advise the master manager module **125** that an attempt to place a phone call within a prohibited time period had been made, encrypt (action **360**) the status report and transmit (action **365**) the encrypted status report as a response to the master manager module **125** of the master device **120** for processing as discussed above (action **295 of** **Figure 2**). As well or alternatively, a message could be displayed (action **375**) on a display **410** (**Figure 4**) of the slave mobile device **110** advising that the attempted phone call had failed or that the master device **120** had been notified.

If the system time fell outside the prohibited range, the phone call would be allowed to proceed in conventional fashion.

In the case of the second example discussed above, the slave manager module **115,** when triggered (action **370**) by an event listener activates or creates a process **146** that maintains an internal count of outgoing text messages for a given calendar month and upon being triggered, attempts to increment this count. If the incremented internal count exceeds the maximum, the count is not incremented and the attempt to send the text message is stopped in a similar manner as described in connection with the first non-limiting example. As before, the slave manager module **115** can generate (action **380**) a status report to advise the master manager module **125** that the maximum number of text messages had been reached for that month, encrypt (action **360**) it and transmit the encrypted message to the master manager module **125** of the master device **120** for processing as discussed above. As well or alternatively, a message can be displayed (action **375**) on a display **410** (**Figure 4**) of the slave mobile device **110,** advising that the attempt had failed and that the master device **120** had been notified.

Alternatively, if the incremented internal count has not yet reached the threshold value, the outgoing text message is allowed to proceed in conventional fashion.

In the case of the third example discussed above, the slave manager module **115,** when triggered (action **370**) by an event listener **144,** may activate or create a process **146** which compares the location of the slave mobile device **110**, returned by the event listener **144,** against the path. If the location exceeds a pre-determined geo-fence or polygon about the path, the slave mobile device **110** deviates from the path beyond a threshold distance, or the slave mobile device **110** exceeds a predetermined geo-fence about the destination after a predetermined time period, the slave manager module **115** can generate (action **380**) a status report message to advise the master manager module **125** that the slave mobile device **110** had deviated unacceptably from its pre-determined path. The slave manager module **115** encrypts (action **360**) the status report and transmits (action **365**) the encrypted response to the master manager module **125** of the master device **120** as discussed above. As well or alternatively, a message could be displayed (action **370**) on a display **410** (see **Figure 4**) of the slave mobile device **110** advising that the device was deviating unacceptably from its pre-determined path and that the master device **120** had been notified.

In the case of the fourth example discussed above, the slave management module **115** when triggered (action **370**) by an event listener **144** may activate or create a process **146** that generates (action **380**) one or more status reports in one or more messages. Such status reports may contain desired log data or status information, for example, the time, length and phone number of all incoming or outgoing calls, the time of all incoming or outgoing e-mails or text messages and the part(ies) with whom the e-mails or text messages were communicated, any new entries in the address book of the slave mobile device **110,** or any new relationships created through one or more of the social networking sites subscribed by the social networking module. The slave management module **115** encrypts (action **360**) the status report and transmits (action **365**) the encrypted response to the master manager module **125** of the master device **120** as discussed above. As well or alternatively, a message can be displayed (action **375**) on a display **410** (**Figure 4**) of the slave mobile device **110** advising that such data was being distributed.

It will be appreciated that the nature of the processing performed, and the four examples set out above are by way of illustrative example only and not intended to be limiting in any fashion.

It will also be appreciated that some of the event processing for a given requested configuration may be shared with other control configurations or that multiple event listeners **144** could be created, one or more for each associated control configuration.

Referring now to **Figure 4****,** there is shown a graphical representation of a front view of an example of a mobile device **400** can serve as either or both of the slave mobile device **110** and the master device **120.** The mobile device **400** has two-way wireless electronic messaging capabilities and possibly also wireless voice communications capabilities. The mobile device **400,** in various embodiments the mobile device **400** can be, for example, a wireless handset. A mobile device configured as a wireless handset can be further configured as either a data communications device, a multiple-mode communications device configured for both data and voice communication, a mobile telephone, a pager, a personal digital assistant (PDA) enabled for wireless communications, a personal entertainment device enabled for wireless communications. The mobile device **400** can be, for example, a telecommunications device installed within a vehicle, a portable or laptop or notebook or tablet computer with a wireless modem or wireless network card.

The mobile device **400** includes a display screen **410,** an alphanumeric keyboard or keypad **420,** optionally one or more non-keyboard inputs, such as buttons **421-428,** which may be navigational, function, exit or escape keys, which may be inwardly depressed to provide further input function, or touch-sensitive areas (not shown) within the display screen **410,** or a rotatable input device such as a trackball **430** or scrollwheel or trackwheel or trackpad (not shown) and a speaker **441,** visible indicator **442** or other alert **537** (shown on **Figure 5**).

The keyboard or keypad **420** may comprise a touch-sensitive surface (not shown). In some example embodiments keys in the keyboard **420** may contain one or more letters aligned in a QWERTY layout. In some example embodiments the keys in the keyboard **420** may not be actual physical keys but may be virtual keys displayed on a touch screen display (not shown). In some example embodiments, the keyboard **420** includes a QWERTZ layout, an AZERTY layout, a Dvorak layout, sequential type layouts or the like, or a traditional numeric keypad (not shown) with alphabetic letters associated with a telephone keypad. In some example embodiments, the keyboard **420** layout has reduced keys, such as a reduced QWERTY layout.

Referring now to **Figure 5****,** the mobile device **400** includes a controller that includes at least one processor or digital signal processor (DSP) **510** for controlling the overall operation of the mobile device **400.** The processor **510** interacts with a communications subsystem shown generally at **520,** and with further device subsystems such as display **410,** which may include a touch-sensitive surface, keyboard or keypad **420,** one or more auxiliary input / output (I/O) subsystems or devices **533** (*e*.*g*. trackball **430,** non-keyboard inputs **421-428** or a scrollwheel, trackpad or trackwheel (not shown) and their associated controllers), one or more alerts **537** (which may be audible **441,** visible **442** and/or tactile (not shown)) or a headset port (not shown), a microphone **535,** a serial port **536,** which may be a universal serial bus (USB) port, a flash memory **540,** random access memory (RAM) **550,** a removable memory card **551,** a charge-coupled device (CCD) camera **580,** a global positioning system (GPS) (or other navigation) satellite receiver **560,** and any other device subsystems generally designated as **570.**

The processor **510** operates under stored program control of the operating system software or firmware **541** and various software or firmware applications **549** used by the microprocessor **510,** which are, in one example embodiment, stored in a persistent store such as flash memory **540** or similar storage element. The operating system **541** software applications shown generally at **549,** or parts thereof, may be temporarily loaded into a volatile store such as RAM **550.**

The processor **510** executes operating system software drivers **590** that provide a platform from which the rest of the software **541, 549** operates. The operating system software drivers **590** provide drivers for the device hardware with standardized interfaces that are accessible to application software. The operating system software drivers **590** include application management services ("AMS") (not shown) that transfer control between applications running on the mobile device **400.**

The processor **510,** in addition to its operating system **541** functions, in example embodiments, enables execution of software applications **549** for interacting with the various device subsystems of the mobile device **400,** by presenting options for user-selection, controls for user-actuation, or cursors or other indicators for user-direction. The mobile device **400** may further accept user data entry, including numbers to dial or various parameter values for configuring the operation of the mobile device **400.**

A predetermined set of software applications **549** may be executed in response to user commands to control basic device operations, including data and voice communication applications, such as a web browser module **542,** a telephone module **543,** an address book module **544,** an electronic messaging module **545** (which may include e-mail, SMS messaging or PIN messaging) and a calendar module **546,** for example, will normally be installed on the mobile device **400** during manufacture. Further software applications **548,** such as the master manager module **125,** the slave manager module **115,** a mapping module **547,** a game (not shown), a media player (not shown), a camera (not shown), one or more Java applications (not shown), and in some example embodiments, the master manager module **125** may also be loaded onto the mobile device **400** during manufacture, or through wired or wireless communications along the communications subsystem **520,** the auxiliary I/O subsystem **533,** serial port **536,** information carrier media such as portable data storage media like the removable memory card **551,** or any other suitable subsystem **570,** and installed in the RAM **550** or a non-volatile store such as the flash memory **540** for execution by the processor **510.** These applications may configure the mobile device **400** to perform various functions in response to user interaction. Such flexibility in application installation increases the functionality of the mobile device **400** and may provide enhanced on-device functions, communication-related functions, or both. In some embodiments, some or part of the functionality of the functional modules can be implemented through firmware or hardware components instead of, or in combination with, computer software instructions executed by the processor **510** (or other processors (not shown)).

The various software applications **548, 549** may constitute the user-accessible features **112** of the slave mobile device **110,** including various modules referred to previously in this description with respect to the slave mobile device **110,** such as browser module **542,** telephone module **543,** address book module **544,** electronic messaging module **545** (providing two-way electronic messaging capability **130**), calendar module **546,** mapping module **547,** game module, media player, and camera.

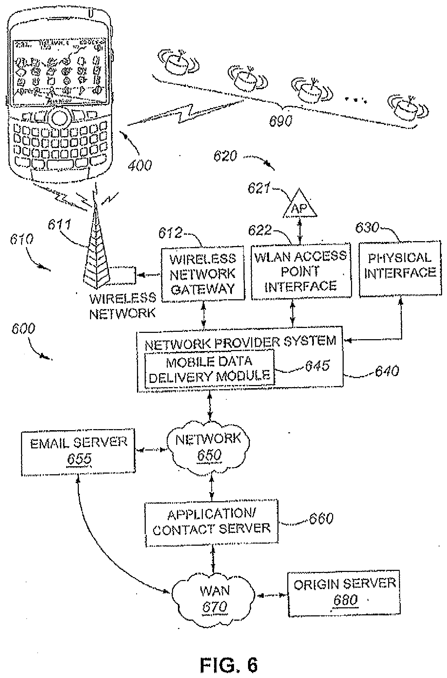

Under instructions from various software applications **549** resident on the mobile device **400,** the processor **510** is configured to implement various functional components or modules, for interacting with the various device subsystems of the mobile device **400.** Additionally, the processor **510** may be configured or programmed over-the-air, for example from a wireless base station **610,** a wireless access point **621** (shown on **Figure 6**), or a peer mobile device **400,** for example, in the case of the slave mobile device **110,** the master device **120** as disclosed herein. The software applications **549** may comprise a compiled set of machine-readable instructions that configure the processor **510** to provide the desired functionality, or the software applications **549** may be high-level software instructions to be processed by an interpreter or compiler to indirectly configure the processor **510.**

An icon is shown highlighted or focused by a caret or selection symbol **460** which can be navigated by a device user among the displayed icons through manipulation of the trackball **430** (or other navigational input device). The trackball **430** is also depressible, such that depression of the trackball **430** when an icon is highlighted or focused by selection symbol **460** results in the launch of functions of the associated module.

Each of the software applications **549** may include layout information defining the placement of particular fields, such as text fields, input fields, *etc.,* in a user interface for the software application **549.**

In **Figure 5****,** the communications subsystem **520** acts as an interface between the mobile device **400** and a communications environment **600** shown in **Figure** 6. The particular configuration of the communications subsystem **520** will be dependent upon the communications network(s) in the communications environment **600** in which the mobile device **400** is intended to operate.

In **Figure 6****,** the communications environment **600** is shown to include one or more mobile devices **400** (only one of which is shown in **Figure 6**), a wireless Wide Area Network (WWAN) **610** and associated base station **611,** a Wireless Local Area Network (WLAN) **620,** or other interfaces. In some example embodiments, the mobile device **400** is configured to communicate in both data and voice modes over both WWAN **610** and WLAN **620** networks and to roam between such networks.

Thus, in the example embodiment shown in **Figure 5****,** the communications subsystem **520** includes a WWAN communications module **521,** a WLAN communications module **522** and a short range communications module **523.**

The WWAN communications module **521** provides two-way communications with the WWAN **610** and the WLAN communications module **522** provides two-way communications with the WLAN **620** along an access point **621** associated therewith.

The processor **510** may communicate with a wireless network via the analog baseband processing unit. In some embodiments, the communication may provide Internet connectivity, enabling a user to gain access to content on the Internet and to send and receive e-mail or text messages, such as the messages exchanged between the slave manager module **115** on the slave mobile device **110** and the master manager module **125** on the master device **120.** The flash memory **540,** RAM **550** and the removable memory card **551** may provide software and data to configure the operation of the processor **510.** Among the interfaces may be the serial port **536** and the short range wireless communication sub-system **523.** The serial port **536** may be used to charge the mobile device **400** and may also enable the mobile device **400** to function as a peripheral device to exchange information with a personal computer or other computer system. The short range wireless communication sub-system **523** may include an infrared port, a Bluetooth interface, an IEEE 802.11 compliant wireless interface, or any other short range wireless communication sub-system, which may enable the mobile device **400** to communicate wirelessly with other nearby mobile devices or wireless base stations (not shown).

In a data communications mode, a received signal such as a text message or web page download will be processed by the communications subsystem **520** and output to the processor **510,** which further processes the received signal for output to the display **410,** or alternatively to an auxiliary I/O device **533.**

The flash memory **540** or other persistent storage of the mobile device **400** may house, in addition to software or firmware stored program instructions, certain information including address book information such as telephone numbers, email or instant text messaging addresses and PIN numbers. Such information may also be at least partially stored at least some of the time in memory of a Subscriber Identity Module (SIM) card (not shown) used with the mobile device **400,** in volatile device memory (such as the RAM **450**), or at a location accessible to the mobile device **400** over WWAN **610.** Additionally, the flash memory **540** may be used to store data structures, preferences or parameters, including without limitation, requests and status information.

The RAM **550,** which may constitute non-volatile or volatile memory, with or without battery backup, may be used as a supplement to, or in place of, flash memory **540,** and to maintain data or program instructions for use by the processor **510** in executing one or more of the functions of operating system **541** or the software applications **549.**

Turning now to **Figure 6****,** the WWAN **610** may be implemented as a packet-based cellular network that includes a number of base stations **611** (only one of which is shown), where each of the base stations **611** provides wireless Radio Frequency (RF) coverage to a corresponding area or cell. The WWAN **610** is typically operated by a cellular network service provider that sells subscription packages to users of mobile electronic devices. The WWAN **610** comprises a number of different types of networks, for example, Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), IDEN (Integrated Digital Enhanced Network) or various other networks such as EDGE (Enhanced Data rates for GSM Evolution) or UMTS (Universal Mobile Telecommunications Systems) or HSPA (High Speed Packet Access) or LTE (Long Term Evolution) and other network technologies.

The communications environment **600** also includes a wireless network gateway **612** and one or more network provider systems **640.** The wireless network gateway **612** provides translation and routing services between the network provider system(s) **640** and the WWAN **610,** which facilitates communication between the mobile device **400** and other devices (not shown) connected, directly or indirectly, to the network provider system **640.**

The WLAN **620** comprises a network which, in some example embodiments, conforms to IEEE 802.11 standards such as 802.11b or 802.11g; however, other communications protocols may also be used for the WLAN **620.** The WLAN **620** includes one or more wireless RF Access Points (AP) **621** (one of which is shown), that collectively provide a WLAN coverage area. The WLAN **620** may be operated by an enterprise (for example, a business or university) and the access points **621** are connected to an access point (AP) interface **622.** The AP interface **622** provides translation and routing services between the access points **621** and the network provider system **640** to facilitate communication between the mobile device **400** and other devices (not shown) connected directly or indirectly, to the network provider system **640.** The AP interface **622** is implemented using a computer, for example, a server running a suitable computer program or software.

According to one embodiment, other interfaces may be implemented using a physical interface **630.** The physical interface **630** may include an Ethernet, Universal Serial Bus (USB), Firewire or infrared (IR) connection implemented to exchange information between the network provider system **640** and the mobile device **400** when physically connected therewith.

The network provider system **640** comprises a server which is located behind a firewall (not shown). The network provider system **640** provides access for the mobile device **400,** through either the WWAN **610,** the WLAN **620,** or one of the physical interfaces **630** to the devices connected, for example, through an enterprise network **650** *(e.g.* an intranet), to the network provider system **640,** such as a network **650,** an email server **655,** one or more application/content servers **660,** a second WWAN **670** or an origin server **680.**

According to one embodiment, a mobile data delivery module **645** provides HTTP connectivity between the WWAN **610** and the WLAN **620** and the other physical connections **630** and devices or networks connected directly or indirectly to the network provider system **640.** In one embodiment, the mobile data delivery module **645** is implemented on a computer, such as one housing the network provider system **640.** The network **650,** the email server **655,** the application/content server **660,** the second WWAN **670** and the origin server **680** are individually or collectively in various combinations, a content source for the network provider system **640.** It will be appreciated that the system shown in **Figure 6** comprises one possible communications network or configuration for use with the mobile device **400.**

The network **650** may comprise a local area network, an intranet, the Internet, a direct connection, or combinations thereof. According to one embodiment, the network **650** comprises an intranet for a corporation or other type of organization.

In one example configuration, the email server **655** is connected to the network **650.** This server **655** is configured to direct or redirect email messages received over the second WWAN **670** and internally within the enterprise network **650** to be addressed to the mobile device **400.**

The application/content server **660** may be connected to the network **650** and also to another network, for example, the second WWAN **670.**

The second WWAN **670** may further connect to other networks. In one embodiment, the second WWAN **670** comprises or is configured with the Internet, a direct connection, a LAN, a wireless communication link, or any combination thereof.

Content providers, such as the origin server **680,** or Web servers, may be connected to the second WWAN **670.**

The communications environment **600** may also include a network of Global Positioning System (GPS) or other system of navigation satellites **690.**

In the foregoing disclosure, for purposes of explanation and not limitation, specific details are set forth such as particular architectures, interfaces, techniques, *etc.* in order to provide a thorough understanding of the present disclosure. However, it will be apparent to those having ordinary skill in this art that the present disclosure may be practiced in other embodiments that depart from these specific details.

In some instances, detailed descriptions of well-known devices, circuits, and methods are omitted so as not to obscure the description of the present disclosure with unnecessary detail. All statements herein reciting principles, aspects and embodiments of the disclosure, as well as specific examples thereof, are intended to encompass both structural and functional equivalents thereof. Additionally, it is intended that such equivalents include both currently known equivalents as well as equivalents developed in the future, *i.e.,* any elements developed that perform the same function, regardless of structure.

Thus, for example, it will be appreciated that block diagrams reproduced herein can represent conceptual views of illustrative components embodying the principles of the technology.

Similarly, it will be appreciated that any flow charts, state transition diagrams, pseudocode, and the like represent various processes, which may be substantially represented in computer-readable medium and so executed by a computer or processor, whether or not such computer or processor is explicitly shown.

The present disclosure can be implemented in digital electronic circuitry, or in computer hardware, firmware, software, or in combination thereof. Apparatus of the disclosure can be implemented in a computer program product tangibly embodied in a machine-readable storage device for execution by a programmable processor; and methods and actions can be performed by a programmable processor executing a program of instructions to perform functions of the disclosure by operating on input data and generating output.

The functions of the various elements including functional blocks labelled as "modules", "processors" or "controllers" may be provided through the use of dedicated hardware, as well as hardware capable of executing software in association with appropriate software with sufficient processing power, memory resources, and network throughput capability to handle the necessary workload placed upon it.

When provided by a processor, the functions may be provided by a single dedicated processor, by a single shared processor, or by a plurality of individual processors, some of which may be shared or distributed. Moreover, explicit use of the term "module", "processor" or "controller" should not be construed to refer exclusively to hardware capable of executing software, and may include, without limitation, digital signal processor (DSP) hardware, read-only memory (ROM) for storing software, random access memory (RAM) and non-volatile storage.

The disclosure can be implemented advantageously on a programmable system including at least one input device, and at least one output device. Each computer program can be implemented in a high-level procedural or object-oriented programming language, or in assembly or machine language, if desired; and in any case, the language can be a compiled or interpreted language.

Suitable processors include, by way of example, both general and specific microprocessors. Generally, a processor will receive instructions and data from a read-only memory or a random access memory. Generally, a computer will include one or more mass storage devices for storing data file; such devices include magnetic disks and cards, such as internal hard disks, and removable disks and cards; magneto-optical disks; and optical disks. Storage devices suitable for tangibly embodying computer program instructions and data include all forms of volatile and non-volatile memory, including by way of example semiconductor memory devices, such as EPROM, EEPROM, and flash memory devices; magnetic disks such as internal hard disks and removable disks; magneto-optical disks; CD-ROM and DVD-ROM disks; and buffer circuits such as latches or flip flops. Any of the foregoing can be supplemented by, or incorporated in ASICs

(application-specific integrated circuits), FPGAs (field-programmable gate arrays) or DSPs (digital signal processors).

Examples of such types of computer are programmable processing systems contained in the processor **510** and other DSPs (not shown) suitable for implementing or performing the apparatus or methods of the disclosure. The system may comprise a processor, (which may be referred to as a central processor unit or CPU), which may be implemented as one or more CPU chips, and that is in communication with memory devices including secondary storage, read only memory (ROM), a random access memory, a hard drive controller, or an input/output devices or controllers, and network connectivity devices, coupled by a processor bus.

The secondary storage is typically comprised of one or more disk drives or tape drives and is used for non-volatile storage of data and as an over-flow data storage device if RAM is not large enough to hold all working data. Secondary storage may be used to store programs which are loaded into RAM when such programs are selected for execution. The ROM is used to store instructions and perhaps data which are read during program execution. ROM is a non-volatile memory device which typically has a small memory capacity relative to the larger memory capacity of secondary storage. The RAM is used to store volatile data and perhaps to store instructions. Access to both ROM and RAM is typically faster than to secondary storage.

I/O devices may include printers, video monitors, liquid crystal displays (LCDs), touch screen displays, keyboards, keypads, switches, dials, mice, track balls, voice recognizers, card readers, paper tape readers, or other well-known input devices.

The network connectivity devices may take the form of modems, modem banks, ethernet cards, universal serial bus (USB) interface cards, serial interfaces, token ring cards, fiber distributed data interface (FDDI) cards, wireless local area network (WLAN) cards, radio transceiver cards such as code division multiple access (CDMA) or global system for mobile communications (GSM) radio transceiver cards, and other well-known network devices. These network connectivity devices may enable the processor to communicate with an Internet or one or more intranets. With such a network connection, it is contemplated that the processor might receive information from the network, or might output information to the network in the course of performing the above-described method steps. Such information, which is often represented as a sequence of instructions to be executed using the processor, may be received from and outputted to the network, for example, in the form of a computer data signal embodied in a carrier wave. The network connectivity devices may also include one or more transmitter and receivers for wirelessly or otherwise transmitting and receiving signal as are well known.

Such information, which may include data or instructions to be executed using the processor for example, may be received from and outputted to the network, for example, in the form of a computer data baseband signal or signal embodied in a carrier wave. The baseband signal or signal embodied in the carrier wave generated by the network connectivity devices may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several well known methods.

The processor executes instructions, codes, computer programs, scripts which it accesses from hard disk, floppy disk, optical disk (these various disk based systems may all be considered secondary storage), ROM, RAM, or the network connectivity devices. Multiple processors may be present. Thus, while instructions may be discussed as executed by a processor, the instructions may be executed simultaneously, serially, or otherwise executed by one or multiple processors.

It will be apparent that various modifications and variations may be made to the embodiments disclosed herein, consistent with the present disclosure, without departing from the spirit and scope of the present disclosure.

While example embodiments are disclosed, this is not intended to be limiting. Rather, the general principles set forth herein are considered to be merely illustrative of the scope of the present disclosure and it is to be further understood that numerous changes covering alternatives, modifications and equivalents may be made without straying from the scope of the present disclosure, as defined by the appended claims.

For example, the various elements or components may be combined or integrated in another system or certain features may be omitted, or not implemented. Also, techniques, systems, subsystems and methods described and illustrated in the various embodiments as discrete or separate may be combined or integrated with other systems, modules, techniques, or methods without departing from the scope of the present disclosure. Other examples of changes, substitutions, and alterations are easily ascertainable and could be made without departing from the spirit and scope disclosed herein.

Further, the foregoing description of one or more specific embodiments does not limit the implementation of the invention to any particular computer programming language, operating system, system architecture or device architecture. Moreover, although some embodiments may include mobile devices, not all embodiments are limited to mobile devices; rather, various embodiments may be implemented within a variety of communications devices or terminals, including handheld devices, mobile telephones, personal digital assistants (PDAs), personal computers, audio-visual terminals, televisions and other devices.

Also, the terms "couple" or "communicated" in any form are intended to mean either a direct connection or indirect connection through some interface, device, intermediate component or connection, whether electrically, mechanically, chemically, or otherwise.

Moreover, all dimensions described herein are intended solely to be by way of example for purposes of illustrating certain embodiments and are not intended to limit the scope of the disclosure to any embodiments that may depart from such dimensions as may be specified.

Directional terms such as "upward", "downward", "left" and "right" are used to refer to directions in the drawings to which reference is made unless otherwise stated. Similarly, words such as "inward" and "outward" are used to refer to directions toward and away from, respectively, the geometric center of a device, area or volume or designated parts thereof.

References in the singular form include the plural and *vice versa,* unless otherwise noted.

The terms "including" and "comprising" are used in an openended fashion, and thus should be interpreted to mean "including, but not limited to". The terms "example" and "exemplary" are used simply to identify instances for illustrative purposes and should not be interpreted as limiting the scope of the invention to the stated

instances. In particular, the term "exemplary" should not be interpreted to denote or confer any laudatory, beneficial or other quality to the expression with which it is used, whether in terms of design, performance or otherwise.

Certain terms are used throughout to refer to particular components. Manufacturers may refer to a component by different names. It is not intended to distinguish between components that differ in name but not in function.

The purpose of the Abstract is to enable the relevant patent office or the public generally, skill in the art who are not familiar with patent or legal terms or phraseology, to quickly determine from a cursory inspection the nature of the technical disclosure. The Abstract is neither intended to define the scope of this disclosure, which is measured by its claims, nor is it intended to be limiting as to the scope of this disclosure in any way.

In accordance with a first broad aspect of an embodiment of the present disclosure there is provided a slave mobile device including a user-accessible feature, a two way electronic messaging capability, and a slave manager module adapted to decrypt an e-mail, SMS (Short Message Service) or a PIN (Personal Identification Number) message received through the electronic messaging capability from a paired master device, the electronic message containing a request, and to manage access to the user-accessible feature in accordance with the request.

The user-accessible feature can be selected from a group consisting of: a telephone module, an electronic messaging module, a browser module, a game, a multimedia player, a camera, a social networking module, a calendar module, an address book module and a mapping module.

The electronic messaging capability can be selected from a group consisting of: an e-mail function, an SMS messaging function and a PIN messaging function.

The slave manager module can be adapted for managing the user-accessible feature by preventing access to the feature according to at least one criterion. The at least one criterion can be selected from a group consisting of: date of use, time of day of use, number of times of use, originator and recipient.

The user-accessible feature can be a communications feature and the slave manager module can be adapted to manage the user-accessible feature by controlling the slave device to prevent access to the user-accessible feature when usage limitations for the feature have been reached.

The slave manager module can be further adapted to override usage limitations to permit the user-accessible feature to communicate with authorized persons.

The slave mobile device can be a handset.

The slave manager module can be adapted to pair with a master device to permit encrypted communication between the slave mobile device and the master device through the electronic messaging capability.

The slave manager module can be adapted to pair with the master device utilizing a key exchange protocol to jointly establish a shared secret key over an insecure communications channel.

In accordance with a second broad aspect of an embodiment of the present disclosure there is provided a master device including a two way electronic messaging capability, and a master manager module adapted to generate, encrypt, and transmit an e-mail, SMS (Short Message Service) or a PIN (Personal Identification Number)message to a paired slave mobile device, the message being transmitted through the messaging capability and containing a request to manage access to a user-accessible feature of the slave mobile device in accordance with the request.

In accordance with a third broad aspect of an embodiment of the present disclosure there is provided a method of managing access to a slave mobile device including decrypting an e-mail, SMS (Short Message Service) or a PIN (Personal Identification Number) message from a paired master device received through a two-way electronic messaging capability of the slave mobile device which message contains a request, and managing access to a user-accessible feature of the slave mobile device in accordance with the request.

The user-accessible feature can be selected from a group consisting of a telephone module, an electronic messaging module, a browser module, a game, a multimedia player, a camera, a social networking module, a calendar module, an address book module and a mapping module.

The electronic messaging capability can be selected from a group consisting of an e-mail function, an SMS messaging function and a PIN messaging function.

The user-accessible feature can be managed by preventing access to the feature according to at least one criterion.

The at least one criterion can be selected from a group consisting of date of use, time of day of use, number of times of use, originator and recipient.

The user-accessible feature can be a communications feature and a slave manager module manages the user-accessible feature by controlling the slave device to prevent access to the user-accessible feature when usage limitations for the feature have been reached.

The method can further include overriding the usage limitations to permit the user-accessible feature to communicate with authorized persons.

The slave mobile device can be a handset.

The method can further include pairing the slave device with the master device to permit encrypted communication between the slave mobile device and the master device through the electronic messaging capability.

In accordance with a fourth broad aspect of an embodiment of the present disclosure there is provided a system including the slave mobile device of the first broad aspect, and the master device of the second broad aspect.

In accordance with a fifth broad aspect of an embodiment of the present disclosure there is provided a computer program product including a computer readable medium, and computer-readable instructions stored on the computer readable medium, which when operating on a processor of a slave mobile device cause the device to decrypt an electronic message received through a two-way electronic messaging capability of the slave mobile device which message contains a request, and to manage access to a user-accessible feature of the slave mobile device in accordance with the request.

In accordance with a sixth broad aspect of an embodiment of the present disclosure there is provided a computer program product including a computer readable medium, and computer-readable instructions stored on the computer readable medium, which when operating on a processor of a master device cause the device to generate, encrypt, and transmit an electronic message to a paired slave mobile device, the message being transmitted through the messaging capability and containing a request to manage access to a user-accessible feature of the slave mobile device in accordance with the request.

In accordance with a seventh broad aspect of an embodiment of the present disclosure there is provided a method including generating and encrypting on a master mobile device an electronic message containing a request to manage access to a user-accessible feature of a paired slave mobile device in accordance with the request, and transmitting the message to the paired slave mobile device through a two-way electronic messaging capability of the master mobile device.

In accordance with an eighth broad aspect of an embodiment of the present disclosure there is provided a method of operating a mobile device management system, the method including generating and encrypting on a master device an electronic message containing a request to manage access to a user-accessible feature of a paired slave mobile device in accordance with the request, transmitting the message to the paired slave mobile device through a two-way electronic messaging capability of the master mobile device across an insecure communications channel secured by encrypting the message on the master device, and decrypting an electronic message received through a two-way electronic messaging capability of the slave mobile device which message contains a request received from a paired master device, and managing access to a user-accessible feature of the slave mobile device in accordance with the request.

Other embodiments consistent with the present disclosure will be apparent from consideration of the specification and the practice of the disclosure disclosed herein.

## Claims

1. A slave mobile device (110) comprising:
a user-accessible feature (112);
a two way electronic messaging capability (130); and
a slave manager module (115) adapted: to decrypt an e-mail, Short Message Service (SMS) or a Personal Identification Number (PIN) message received through the electronic messaging capability (130) from a paired master device, the electronic message containing a request; to manage access to the user-accessible feature (112) in accordance with the request by preventing access to the user-accessible feature (112) when a usage limitation for the user-accessible feature (112) has been reached; and to override the usage limitation to permit the user-accessible feature (112) to communicate with one or more authorized persons.

2. The slave mobile device (110) according to claim 1, wherein the user-accessible feature (112) is selected from a group consisting of: a telephone module (543), an electronic messaging module (545), a browser module (542), a game, and a social networking module.

3. The slave mobile device (110) of claim 1 or 2 wherein the slave mobile device (110) is a handset.

4. The slave mobile device (110) of any one of claims 1 through 3, wherein the usage limitation comprises a maximum number of times of use or a maximum number of minutes of use.

5. The slave mobile device (110) of any one of claims 1 through 4, wherein the slave manager module (115) is further adapted to pair with the master device to permit encrypted communication between the slave mobile device (110) and the master device through the two way electronic messaging capability (130).

6. The slave mobile device (110) of claim 5, wherein the slave manager module (115) is further adapted to pair with the master device by utilizing a key exchange protocol to jointly establish a shared secret key over an insecure communications channel.

7. A master device (120) comprising:
a two-way electronic messaging capability (130); and
a master manager module (125) adapted to generate, encrypt, and
transmit an e-mail, Short Message Service (SMS) or a Personal Identification Number (PIN) message to a paired slave mobile device (110), the message being transmitted through the electronic messaging capability (130) and containing a request to manage access to a user-accessible feature (112) of the slave mobile device (110) in accordance with the request by preventing access to the user-accessible feature by the slave mobile device (110) when a usage limitation for the user-accessible feature has been reached,
while permitting the slave mobile device (110) to override the usage limitation to permit the user-accessible feature (112) to communicate with one or more authorized persons.

8. The master device (120) of claim 7, wherein the user-accessible feature (112) is selected from a group consisting of: a telephone module (543), an electronic messaging module (545), a browser module (542), a game, and a social networking module.

9. The master device (120) of claim 7 or 8, wherein the usage limitation comprises a maximum number of times of use or a maximum number of minutes of use.

10. A method of managing access on a slave mobile device (110) comprising: decrypting an e-mail, Short Message Service (SMS) or a Personal Identification Number (PIN) message from a paired master device received through a two-way electronic messaging capability (130) of the slave mobile device (110) which message contains a request; managing access to a user-accessible feature (112) of the slave mobile device (110) in accordance with the request by preventing access to the user-accessible feature (112) when a usage limitation for the user-accessible feature (112) has been reached; and overriding the usage limitation to permit the user-accessible feature (112) to communicate with one or more authorized persons.

11. The method of claim 10, wherein the user-accessible feature (112) is selected from a group consisting of: a telephone module (543), an electronic messaging module (545), a browser module (542), a game, and a social networking module.

12. The method of claim 10 or 11, wherein the usage limitation comprises a maximum number of times of use or a maximum number of minutes of use.

13. The method of any one of claims 10 through 12, further comprising pairing with the master device to permit encrypted communication between the slave mobile device (110) and the master device through the two way electronic messaging capability (130).

14. The method of claim 13, wherein the pairing comprises utilizing a key exchange protocol to jointly establish a shared secret key over an insecure communications channel.

15. A system comprising:
the slave mobile device (110) of any one of claims 1 through 6, and
the master device (120) of any one of claims 7 through 9.

## Patentansprüche

1. Eine mobile Slave-Vorrichtung (110), die aufweist:
ein benutzerzugängliches Merkmal (112);
eine elektronische Zweiweg-Messaging-Fähigkeit (130); und
ein Slave-Verwaltungsmodul (115), das ausgebildet ist zum: Entschlüsseln einer Email-, SMS(Short Messaging Service)- oder PIN(Personal Identification Number)-Nachricht, die über die elektronische Messaging-Fähigkeit (130) von einer paarweise zugeordneten Master-Vorrichtung empfangen wird, wobei die elektronische Nachricht eine Anforderung enthält; Verwalten eines Zugriffs auf das benutzerzugängliche Merkmal (112) in Übereinstimmung mit der Anforderung durch Verhindern eines Zugriffs auf das benutzerzugängliche Merkmal (112), wenn eine Benutzungsbeschränkung für das benutzerzugängliche Merkmal (112) erreicht ist; und Überschreiben der Benutzungsbeschränkung, um zuzulassen, dass das benutzerzugängliche Merkmal (112) mit einer oder
mehreren autorisierten Person(en) kommuniziert.

2. Die mobile Slave-Vorrichtung (110) gemäß Anspruch 1, wobei das benutzerzugängliche Merkmal (112) aus einer Gruppe ausgewählt ist, die besteht aus: einem Telefonmodul (543), einem elektronischen Messaging-Modul (545), einem Browser-Modul (542), einem Spiel und einem Soziale-Netzwerke-Modul.

3. Die mobile Slave-Vorrichtung (110) gemäß Anspruch 1 oder 2, wobei die mobile Slave-Vorrichtung (110) ein Handset ist.

4. Die mobile Slave-Vorrichtung (110) gemäß einem der Ansprüche 1 bis 3, wobei die Benutzungsbeschränkung eine maximale Anzahl einer Benutzung oder eine maximale Anzahl von Benutzungsminuten aufweist.

5. Die mobile Slave-Vorrichtung (110) gemäß einem der Ansprüche 1 bis 4, wobei das Slave-Verwaltungsmodul (115) weiter ausgebildet ist, mit der Master-Vorrichtung paarweise zugeordnet zu werden, um eine verschlüsselte Kommunikation zwischen der mobilen Slave-Vorrichtung (110) und der Master-Vorrichtung über die elektronische Zweiweg-Messaging-Fähigkeit (130) zu erlauben.

6. Die mobile Slave-Vorrichtung (110) gemäß Anspruch 5, wobei das Slave-Verwaltungsmodul (115) weiter ausgebildet ist, mit der Master-Vorrichtung paarweise zugeordnet zu werden, durch Verwenden eines Schlüsselaustauschprotokolls, um gemeinsam einen gemeinsam verwendeten geheimen Schlüssel über einen unsicheren Kommunikationskanal herzustellen.

7. Eine Master-Vorrichtung (120), die aufweist:
eine elektronische Zweiweg-Messaging-Fähigkeit (130); und
ein Master-Verwaltungsmodul (125), das ausgebildet ist zum Erzeugen,
Verschlüsseln und Übertragen einer Email-, SMS(Short Messaging Service)- oder PIN(Personal Identification Number)-Nachricht an eine paarweise zugeordnete mobile Slave-Vorrichtung (110), wobei die Nachricht über die elektronische Messaging-Fähigkeit (130) übertragen wird und eine Anforderung enthält zum Verwalten eines Zugriffs auf ein benutzerzugängliches Merkmal (112) der mobilen Slave-Vorrichtung (110) in Übereinstimmung mit der Anforderung durch Verhindern eines Zugriffs auf das benutzerzugängliche Merkmal durch die mobile Slave-Vorrichtung (110), wenn eine Benutzungsbeschränkung für das benutzerzugängliche Merkmal erreicht ist, während der mobilen Slave-Vorrichtung (110) erlaubt ist, die Benutzungsbeschränkung zu überschreiben, um zuzulassen, dass das benutzerzugängliche Merkmal (112) mit einer oder mehreren autorisierten Person(en) kommuniziert.

8. Die Master-Vorrichtung (120) gemäß Anspruch 7, wobei das benutzerzugängliche Merkmal (112) aus einer Gruppe ausgewählt ist, die besteht aus: einem Telefonmodul (543), einem elektronischen Messaging-Modul (545), einem Browser-Modul (542), einem Spiel und einem Soziale-Netzwerke-Modul.

9. Die Master-Vorrichtung (120) gemäß Anspruch 7 oder 8, wobei die Benutzungsbeschränkung eine maximale Anzahl einer Benutzung oder eine maximale Anzahl von Benutzungsminuten aufweist.

10. Ein Verfahren zum Verwalten eines Zugriffs auf einer mobilen Slave-Vorrichtung (110), das aufweist: Entschlüsseln einer Email-, SMS(Short Messaging Service)- oder PIN(Personal Identification Number)-Nachricht von einer paarweise zugeordneten Master-Vorrichtung, die über eine elektronische Messaging-Fähigkeit (130) der mobilen Slave-Vorrichtung (110) empfangen wird, wobei die Nachricht eine Anforderung enthält; Verwalten eines Zugriffs auf ein benutzerzugängliches Merkmal (112) der mobilen Slave-Vorrichtung (110) in Übereinstimmung mit der Anforderung durch Verhindern eines Zugriffs auf das benutzerzugängliche Merkmal (112), wenn eine Benutzungsbeschränkung für das benutzerzugängliche Merkmal (112) erreicht ist; und Überschreiben der Benutzungsbeschränkung, um zuzulassen, dass das benutzerzugängliche Merkmal (112) mit einer oder mehreren autorisierten Person(en) kommuniziert.

11. Das Verfahren gemäß Anspruch 10, wobei das benutzerzugängliche Merkmal (112) aus einer Gruppe ausgewählt ist, die besteht aus: einem Telefonmodul (543), einem elektronischen Messaging-Modul (545), einem Browser-Modul (542), einem Spiel und einem Soziale-Netzwerke-Modul.

12. Das Verfahren gemäß Anspruch 10 oder 11, wobei die Benutzungsbeschränkung eine maximale Anzahl einer Benutzung oder eine maximale Anzahl von Benutzungsminuten aufweist.

13. Das Verfahren gemäß einem der Ansprüche 10 bis 12, das weiter ein paarweises Zuordnen zu der Master-Vorrichtung aufweist, um eine verschlüsselte Kommunikation zwischen der mobilen Slave-Vorrichtung (110) und der Master-Vorrichtung über die elektronische Zweiweg-Messaging-Fähigkeit (130) zu erlauben.

14. Das Verfahren gemäß Anspruch 13, wobei das paarweise Zuordnen ein Verwenden eines Schlüsselaustauschprotokolls aufweist, um gemeinsam einen gemeinsam verwendeten geheimen Schlüssel über einen unsicheren Kommunikationskanal herzustellen.

15. Ein System, das aufweist:
die mobile Slave-Vorrichtung (110) gemäß einem der Ansprüche 1 bis 6 und die Master-Vorrichtung (120) gemäß einem der Ansprüche 7 bis 9.

## Revendications

1. Dispositif mobile esclave (110) comprenant :
une fonctionnalité accessible à l'utilisateur (112) ;
une capacité de messagerie électronique bidirectionnelle (130) ; et
un module de gestion esclave (115) conçu pour :
déchiffrer un courriel, un message du service de messages courts, SMS pour « *Short Message Service* », ou un message de numéro d'identification personnel, PIN pour « *Personal Identification Number* », reçu via la capacité de messagerie électronique bidirectionnelle (130) en provenance d'un dispositif maître apparié, le message électronique contenant une demande ;
gérer l'accès à la fonctionnalité accessible à l'utilisateur (112) lorsqu'une limite d'utilisation de la fonctionnalité accessible à l'utilisateur (112) a été atteinte ; et
court-circuiter la limite d'utilisation afin de permettre à la fonctionnalité accessible à l'utilisateur (112) de communiquer avec une ou plusieurs personnes autorisées.

2. Dispositif mobile esclave (110) selon la revendication 1, dans lequel la fonctionnalité accessible à l'utilisateur (112) est sélectionnée dans un groupe composé de : module de téléphonie (543), module de messagerie électronique (545), module de navigation (542), jeu et module de réseaux sociaux.

3. Dispositif mobile esclave (110) selon la revendication 1 ou 2, dans lequel le dispositif mobile esclave est un combiné.

4. Dispositif mobile esclave (110) selon l'une quelconque des revendications 1 à 3, dans lequel la limite d'utilisation consiste en un nombre maximal d'utilisations ou un nombre maximal de minutes d'utilisation.

5. Dispositif mobile esclave (110) selon l'une quelconque des revendications 1 à 4, dans lequel le module de gestion esclave (115) est en outre conçu pour s'apparier avec le dispositif maître pour permettre une communication chiffrée entre le dispositif mobile esclave (110) et le dispositif maître via la capacité de messagerie électronique bidirectionnelle (130).

6. Dispositif mobile esclave (110) selon la revendication 5, dans lequel le module de gestion esclave (115) est en outre conçu pour s'apparier avec le dispositif maître en utilisant un protocole d'échange de clefs afin d'établir conjointement une clef secrète partagée sur un canal de communication non sécurisé.

7. Dispositif maître (120) comprenant :
une capacité de messagerie électronique bidirectionnelle (130) ; et
un module de gestion maître (125) conçu pour produire, chiffrer et émettre un courriel, un message du service de messages courts, SMS pour « *Short Message Service* », ou un message de numéro d'identification personnel, PIN pour *« Personal Identification Number* », vers un dispositif mobile esclave (110) apparié, le message étant émis via la capacité de messagerie électronique bidirectionnelle (130) et contenant une demande de gestion de l'accès à une fonctionnalité accessible à l'utilisateur (112) du dispositif mobile esclave (110) conformément à la demande, en empêchant l'accès à la fonctionnalité accessible à l'utilisateur par le dispositif mobile esclave (110) lorsqu'une limite d'utilisation de la fonctionnalité accessible à l'utilisateur a été atteinte, tout en permettant au dispositif mobile esclave (110) de court-circuiter la limite d'utilisation afin de permettre à la fonctionnalité accessible à l'utilisateur (112) de communiquer avec une ou plusieurs personnes autorisées.

8. Dispositif maître (120) selon la revendication 7, dans lequel la fonctionnalité accessible à l'utilisateur (112) est sélectionnée dans un groupe composé de : module de téléphonie (543), module de messagerie électronique (545), module de navigation (542), jeu et module de réseaux sociaux.

9. Dispositif maître (120) selon la revendication 7 ou 8, dans lequel la limite d'utilisation consiste en un nombre maximal d'utilisations ou un nombre maximal de minutes d'utilisation.

10. Procédé de gestion de l'accès sur un dispositif mobile esclave (110), comprenant les étapes consistant à :
déchiffrer un courriel, un message du service de messages courts, SMS pour « *Short Message Service* », ou un message de numéro d'identification personnel, PIN pour « *Personal Identification Number* », provenant d'un dispositif maître apparié, reçu via une capacité de messagerie électronique bidirectionnelle (130) du dispositif mobile esclave (110), ledit message contenant une demande ;
gérer l'accès à une fonctionnalité accessible à l'utilisateur (112) du dispositif mobile esclave (110) en fonction de la demande, en interdisant l'accès à la fonctionnalité accessible à l'utilisateur (112) lorsqu'une limite d'utilisation de la fonctionnalité accessible à l'utilisateur (112) a été atteinte ; et
court-circuiter la limite d'utilisation afin de permettre à la fonctionnalité accessible à l'utilisateur (112) de communiquer avec une ou plusieurs personnes autorisées.

11. Procédé selon la revendication 10, dans lequel la fonctionnalité accessible à l'utilisateur (112) est sélectionnée dans un groupe composé de : module de téléphonie (543), module de messagerie électronique (545), module de navigation (542), jeu et module de réseaux sociaux.

12. Procédé selon la revendication 10 ou 11, dans lequel la limite d'utilisation consiste en un nombre maximal d'utilisations ou un nombre maximal de minutes d'utilisation.

13. Procédé selon l'une quelconque des revendications 10 à 12, comprenant en outre l'étape consistant à s'apparier avec le dispositif maître pour permettre une communication chiffrée entre le dispositif mobile esclave (110) et le dispositif maître via la capacité de messagerie électronique bidirectionnelle (130).

14. Procédé selon la revendication 13, dans lequel l'étape d'appariement comprend une étape consistant à utiliser un protocole d'échange de clefs afin d'établir conjointement une clef secrète partagée sur un canal de communication non sécurisé.

15. Système comprenant :
le dispositif mobile esclave (110) selon l'une quelconque des revendications 1 à 6 et le dispositif maître (120) selon l'une quelconque des revendications 7 à 9.
